Europäisches Patentamt

European Patent Office

Office européen des brevets

(19)

(11) **EP 0 755 194 B1**

(12) **EUROPEAN PATENT SPECIFICATION**

(45) Date of publication and mention
of the grant of the patent:
**02.07.2003 Bulletin 2003/27**

(51) Int Cl.[7]: **A23G 3/30**

(86) International application number:
**PCT/US95/04213**

(21) Application number: **95915563.1**

(22) Date of filing: **04.04.1995**

(87) International publication number:
**WO 95/027405 (19.10.1995 Gazette 1995/45)**

(54) **SUGAR CONTAINING CHEWING GUM WITH PROLONGED SWEETNESS INTENSITY, METHOD FOR MAKING SAID PRODUCT AND USE OF POLYVINYL ACETATE FOR MAKING SAID PRODUCT**

ZUCKER ENTHALTENDEN KAUGUMMI MIT VERLÄNGERTER SÜSSKRAFT UNE EIN VERFAHREN ZUR HERSTELLUNG DESSELBEN UND DIE VERWENDUNG VON POLYVINYL-ACETAT ZUR HERSTELLUNG DESSELBEN

GOMME A MACHER CONTENANT UN SUCRE AYANT UNE INTENSITE DE SAVEUR PROLONGEE, METHODE DE FABRICATION DE LA DITE PATE A MACHER ET UTILISATION DE L'ACETATE DE POLYVINYLE POUR LA PREPARATION DU DIT PRODUIT

(84) Designated Contracting States:
**DE DK FR GB IT**

(30) Priority: **12.04.1994 US 226667**
**13.05.1994 US 242301**

(43) Date of publication of application:
**29.01.1997 Bulletin 1997/05**

(73) Proprietor: **WM. WRIGLEY JR. COMPANY**
**Chicago Illinois 60611 (US)**

(72) Inventors:
• **SONG, Joo H.**
**Northbrook, IL 60062 (US)**
• **BRODERICK, Kevin B.**
**Berwyn, IL 60402 (US)**

(74) Representative:
**Baverstock, Michael George Douglas et al**
**BOULT WADE TENNANT,**
**Verulam Gardens**
**70 Gray's Inn Road**
**London WC1X 8BT (GB)**

(56) References cited:
**EP-A- 0 102 081**        **EP-A- 0 376 549**
**AU-B- 518 799**          **US-A- 3 974 293**
**US-A- 4 188 406**        **US-A- 4 526 790**
**US-A- 4 721 620**        **US-A- 4 794 003**
**US-A- 4 986 991**        **US-A- 5 110 608**

**Description**

<u>FIELD OF THE INVENTION</u>

This invention relates to a method of enhancing the sweetness of a sugar-containing chewing gum free of modified high intensity sweeteners and other artificial sweeteners, after several minutes of chewing. This invention also includes a sugar-containing chewing gum product having enhanced long-term sweetness intensity.

<u>BACKGROUND OF THE INVENTION</u>

Due to the demand for lower calorie and anticaries chewing gum products, considerable effort has been directed toward the development of sugarless chewing gums containing high intensity sweeteners and other non-sugar sweeteners. Along with these efforts, considerable work has been done to adjust the flavor and sweetness profiles of these sugarless chewing gums. This work has included the development of compatibilizing agents, enhancing agents, encapsulation techniques, blending techniques and other methods of optimizing flavor and sweetness.

Because of the trend towards sugarless gums, comparatively less effort has been devoted to improving and/or optimizing the sweetness of sugar-containing gums, defined herein as chewing gums whose sweetness depends in whole, or in part, on the presence of sugar. However, there are still many chewing gums in which the presence of sugar plays an important role in sweetening the gum. Many bubble gums and pellet gums, and some standard chewing gums, still contain sugar. Some consumers prefer the use of natural sugars over high intensity sweeteners, which are synthetic.

Because of its high solubility in water, sugar has a tendency to release very rapidly into the mouth during chewing of the sugar-containing gums. Therefore, gums whose sweetness depends primarily on sugar tend to lose their sweetness rapidly, i.e., during the first 7-10 minutes of chewing. This problem has been addressed in the prior art, to an extent, by adding high intensity sweeteners having delayed flavor release (for example, encapsulated or spray-dried high intensity sweeteners) to sugar-containing gums. However, little has been done to modify the release of the sugar, or to enhance the long-term sweetness contributed by the sugar.

EP-A-102,081 discloses a reduced-shrink bubble gum composition and method for preparing same. The composition is prepared with an increased amount of inert inorganic filler and a non-styrene butadiene base. The filler material is included as a component of the base and as a component added after formation of the base. The gum base also includes non-SBR type masticatory substances of synthetic origin, such as polyvinyl acetate.

US-A-4,188,406 discloses a polymeric binder for chewing gum and a method for preparing the same. The polymeric binder consists of an oligomer of vinylacetate with a molecular weight of from 2,500 to 6,000 and a plastifying agent, i.e. water.

US-A-3,974,293 discloses a non-adhesive chewing gum composition formed from a synthetic gum base material which contains titanium dioxide, various detackifying agents such as vinyl polymers having a molecular weight of at least 2,000, preferably 2,000 to 10,000, viscosity modifying agents and wetting agents, and a soluble phase which includes one or more sweeteners, wetting agents, flavoring materials, coloring, and optionally chlorophyllin or other breath freshener.

In order to provide a pleasing, long-lasting sweetness to sugar-containing gum, it is generally desirable to prolong the time period during which at least 15% of the original sweetness intensity is apparent to the consumer. In other words, the consumer initially detects a sweetness burst of a relatively high intensity when chewing is commenced. Thereafter, the detected sweetness intensity inevitably declines with time during chewing. When the detected sweetness intensity decreases by more than 85% from the original level, the gum may acquire a flat or bitter taste and is less pleasant to chew. Therefore, the enjoyable sweetness period can be prolonged by increasing the time during which at least 15% of the original sweetness intensity is apparent.

<u>SUMMARY OF THE INVENTION</u>

The present invention is a sugar-containing chewing gum which has enhanced long-term sweetness provided by the sugar.

The present invention provides a method of making a sugar-containing chewing gum, free of modified high intensity sweeteners and other artificial sweeteners, having enhanced long-term sweetness provided by the sugar, comprising the steps of:

providing from 10 to 95 wt% of a chewing gum base including polyvinyl acetate having a number average molecular weight of at least 30,000 as a mildly hydrophilic polymer attractor in sufficient quantity to constitute at least 8.4 wt% of the chewing gum;

providing from 10 to 90 wt% sugar which is at least 60% as sweet as sucrose;

providing one or more humectants;

adding the gum base, sugar humectant/s and any other ingredients to a mixer;

blending the ingredients together to form chewing gum whereby;

some of the sugar mixes with water to form a water-sugar mixture;

at least some of the water/sugar mixture is temporarily attached to the mildly hydrophilic polymer attractor; and

the temporary attachment of the water/sugar mixture to the polymer attractor temporarily delays the release of the sugar thereby providing enhanced long-term sweetness during chewing.

The present invention further provides a sugar-sweetened chewing gum, free of modified high intensity sweeteners & other artificial sweeteners having enhanced long-term sweetness, comprising the following ingredients:

from 10 to 95% by weight of a water-insoluble portion including polyvinyl acetate having a number average molecular weight of at least 30,000 as a mildly hydrophilic polymer attractor in sufficient quantity to constitute at least 8.4 wt% of the chewing gum;

from 10 to 90 wt% sugar selected from the group consisting of saccharide-containing compounds which are at least 60% as sweet as sucrose.

at least 2 wt% water;

wherein some of the sugar is mixed with water;

wherein at least some of the water mixed with sugar is temporarily attached to the mildly hydrophilic polymer attractor; and

from 0.1 to 15 wt% of one or more flavouring agents.

The present invention also provides the use of polyvinyl acetate having a number average molecular weight of at least 30,000 in sufficient quantity to constitute at least 7 wt% of a sugar-containing chewing gum to enhance the long-term sweetness of the chewing gum.

The term "sugar" is defined herein as including sucrose, dextrose, fructose, maltose, dried invert sugar, and other saccharide-containing compounds which are at least 60% as sweet as sucrose. Notably, the present invention achieves the objective of enhanced long-term sweetness provided by the sugar, without sacrificing the initial sweetness burst, which is also provided by the sugar.

In addition to sugar, the present invention prefers the presence of enough water in the chewing gum to dissolve or attach a significant amount of the sugar. Therefore, the invention is preferably directed to high moisture-containing sugar-containing gums which include at least 2.0% by weight moisture, and most preferably more. Alternatively, the needed moisture may be provided from the water in the mouth during chewing. It is not essential that all of the sugar be dissolved in the moisture. However, only that portion of the sugar which is dissolved or attached to the moisture is likely to contribute to the long-term sweetness enhancement achieved with the invention. In addition to sugar and a sufficient amount of water, the present invention also requires the presence of a mildly hydrophilic polymer attractor for the water. The term "mildly hydrophilic" means a polymer which has enough hydrophilic character to temporarily attract and restrain the water mixed with the sugar during chewing, but which is not so hydrophilic as to permanently absorb or restrain the water mixed with the sugar. For purposes of the present invention, the mildly hydrophilic polymer attractor is polyvinyl acetate having a number average molecular weight of at least 30,000.

Finally, the chewing gum of the invention does not require the presence of a modified high intensity sweetener to provide enhanced long-term sweetness. This is because the mildly hydrophilic polymer attractor temporarily restrains enough of the water mixed with auger that some of the sugar sweetness is released later in the chewing process. This restraining effect occurs regardless of whether the water is initially present in the chewing gum, or is supplied from the mouth during chewing. Surprisingly, the present invention maintains the integrity of the initial sweetness burst provided by the sugar, while at the same time changing the race of sweetness dissipation so that the chewing gum maintains at least 15% of its original apparent sweetness intensity provided by the sugar over a longer period of time.

Generally, the invention will prolong the period during which at least 15% of the original sweetness is apparent during chewing, by at least one minute, and more often by two or more minutes, compared to conventional sugar-containing chewing gums. This means that the period of enjoyable sweetness, during which the sweetness intensity remains at or above 15% of the original sweetness intensity, can now be increased to 9-15 minutes, compared to a previous range of 7-10 minutes, without adding modified high intensity sweeteners, without increasing the amount of sugar added to the gum, and without lowering the intensity of the initial sweetness burst. Still longer periods of enjoyable sweetness can be achieved by increasing the amount of moisture in the gum, by increasing the amount or molecular weight of the mildly hydrophilic polymer attractor, and/or by adding a modified high intensity sweetener known in the art.

With the foregoing in mind, it is a feature and advantage of the invention to provide a sugar-sweetened chewing gum having an enjoyable sweetness period at least one minute longer, and often two or more minutes longer, than the enjoyable sweetness period of a conventional sugar-sweetened chewing gum containing the same level and type of sugar.

It is also a feature and advantage of the invention to provide a sugar-sweetened chewing gum whose long-term sweetness is enhanced without significantly affecting the intensity of the initial sweetness burst provided by the sugar.

It is also a feature and advantage of the invention to provide a method of making a sugar-sweetened gum with enhanced long-term flavor intensity which does not require the addition of a modified high-intensity sweetener, i. e., which enhances the long-term sweetness provided by the sugar.

It is also a feature and advantage of the invention to provide the chewing gum manufacturer with a variety of parameters that can be changed or adjusted for the effect of enhancing the long-term sweetness intensity of a sugar-sweetened chewing gum.

The foregoing and other features and advantages of the invention will become further apparent from the following detailed description of the presently preferred embodiments, read in conjunction with the accompanying examples and drawings. The detailed description, examples and drawings are merely illustrative rather than limiting, with the scope of the invention being defined by the appended claims and equivalents thereof.

## BRIFF DESCRIPTION OF THE FIGURES

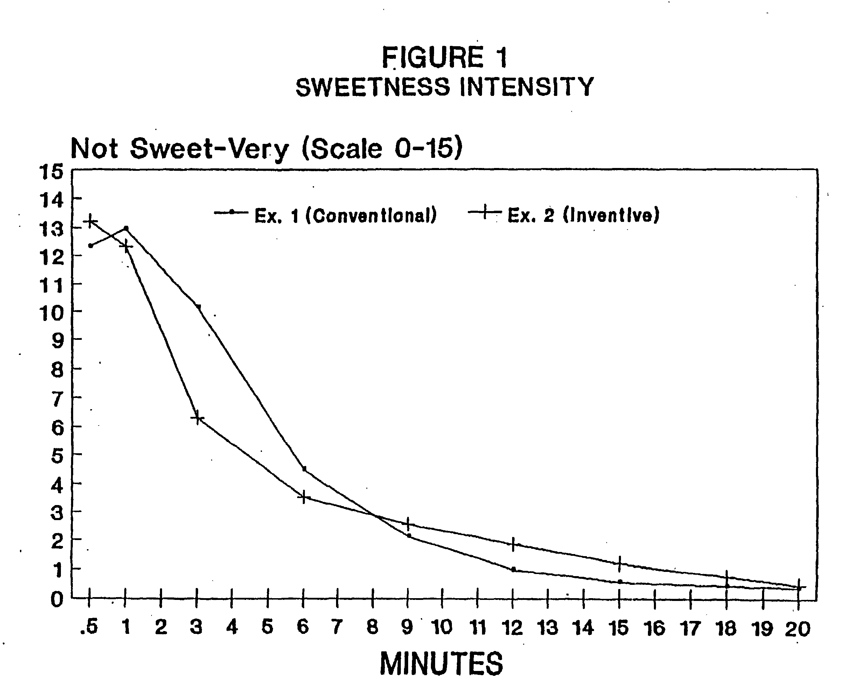

FIG. 1 shows the sweetness intensity as a function of chewing time for a conventional sugar-sweetened chewing gum versus a sugar-sweetened chewing gum of the invention, using equal starting levels of sugar. FIG. 1 corresponds to the samples described in Examples 1 and 2.

## DETAILED DESCRIPTION OF THE PRESENTLY PREFERRED EMBODIMENTS

Hydrophilic materials have a tendency to attract and/or absorb moisture. Materials which are highly hydrophilic may absorb so much moisture that the hydrophilic material dissolves in the moisture. Materials which are hydrophobic, on the other hand, repel moisture. Between the two extremes are materials which can be called "mildly hydrophilic", i.e., materials which can attract and restrain some moisture without being dissolved or otherwise materially changed in state.

Polyvinyl acetate having a number average molecular weight of at least 30,000, is one such mildly hydrophilic material. Due in part to hydrogen bonding, the acetate groups attract some moisture. However, the polymer does not dissolve in water and the amount of water absorbed is not sufficient to materially change the state of the polymer.

While not wishing to be bound by theory, it is believed the polyvinyl acetate having a number average molecular weight of at least 30,000 not only attracts moisture but also protects or "restrains" the moisture for a period of time during chewing. This is because the polyvinyl acetate molecules are sufficiently long that they become twisted and turned, entangled and wrapped, thereby offering a greater temporary protection of water molecules attached thereto, during chewing. As stated above, the water may be part of the initial chewing gum composition, or may be provided during chewing.

In other words, water mixed with sugar that is attached to the polyvinyl acetate prior to or during chewing, will only gradually be released during chewing as the polyvinyl acetate molecules twist, turn, unwrap and rewrap, thereby exposing attached water mixed with sugar to the water in the mouth. In the early stages of chewing, sugar is more concentrated within the saliva moisture and becomes readily intermixed with, and attached to, the polyvinyl acetate. As more moisture is supplied during chewing, the sugar slowly leaches out of the moisture held by the polyvinyl acetate, causing a delayed sweetness sensation.

For purposes of the invention, it is preferred that the polyvinyl acetate has a number average molecular weight between 30,000-80,000. Although higher molecular weight polyvinyl acetate can be used, this may require the use of a plasticizer to prevent undue stiffening of the chewing gum. Plasticizers, for example, glycerol triacetate, are also attracted to the polyvinyl acetate, and may interfere with the attraction between polyvinyl acetate and the water/sugar mixture.

In order to provide the desired long-term sweetness enhancement, the sugar-sweetened gum of the invention includes at least 8.4% by weight of polyvinyl acetate having a number average molecular weight of at least 30,000 (herein referred to as medium to high molecular weight polyvinyl acetate). Preferably, the sugar-sweetened gum of the invention will include at least 9%, most preferably at least 11%, by weight medium to high molecular weight polyvinyl acetate.

In addition to the mildly hydrophilic polymer attractor (e.g. the medium to high molecular weight polyvinyl acetate), the sugar-sweetened chewing gum of the invention may initially include a relatively high amount of moisture in order to mix with and "carry" enough sugar that the long-term sweetness intensity is noticeably enhanced. The moisture can be provided by any humectant component of the chewing gum, for example, water-containing softeners and sweetener solutions, or may be added later during chewing. Typical sugars are highly soluble in water, meaning that water can be highly absorbed into sugar. Therefore, a given quantity of water can mix with and carry a much larger amount of sugar. Nevertheless, it is preferred that the sugar-sweetened chewing gum of the invention initially include at least 2.0% by weight water, more preferably at least 2.5% by weight water, most preferably at least 3.0% by weight water.

The sugar component may be any conventional or naturally occurring sugar that is at least 60% as sweet as sucrose. Examples of suitable sugars include sucrose, dextrose, fructose, maltose, dried invert sugar and the like, and mixtures thereof. While sugars having lower sweetness may be present, they are not material to the invention. Sugars which are less than 60% as sweet as sucrose will not materially enhance the long-term sweetness of the gum, because they are not very sweet to begin with. Sucrose is the most preferred sugar component.

The sugar component may be present at 10-90% by weight of the chewing gum, preferably 20-80% by weight of the chewing gum, most preferably 30-60% by weight of the chewing gum. It is not intended that all of the sugar will become attached to the chewing gum moisture or be restrained by the mildly hydrophilic polymer attractor. To the contrary, some of the sugar should remain unattached in order to provide the pleasing initial sweetness burst during chewing. Instead, only enough sugar needs to be carried by the water, and restrained by the mildly hydrophilic polymer attractor, to provide the desired long-term sweetness enhancement. The amount of sugar which is carried and restrained generally increases with the amounts of water and polyvinyl acetate in the chewing gum.

As stated above, the chewing gum of the invention has enhanced long-term sweetness during chewing which is provided by the sugar, in addition to a pleasing initial sweetness burst which is also provided by the sugar. In other words, modified high intensity sweeteners and other artificial sweeteners used in the prior art to provide enhanced long-term sweetness, are not required. The chewing gum of the invention is free of all artificial sweeteners.

The sugar-sweetened chewing gum of the invention generally includes a water soluble bulk portion, a water insoluble chewing gum base portion, a mildly hydrophilic polymer attractor (generally included in the gum base), and one or more flavoring agents. The water soluble portion dissipates over a period of time during chewing. The gum base portion and polymer attractor are retained in the mouth throughout the chewing process.

The insoluble gum base generally includes elastomers, resins, fats, oils, waxes, and inorganic fillers. The elastomers may include polyisobutylene, isobutylene-isoprene copolymer, styrene butadiene rubber and natural latexes such as chicle. The resins may include polyvinyl acetate, terpene resins, and rosin esters. Medium to high molecular weight polyvinyl acetate (average M.W. = 30,000-80,000) is a preferred resin, with an average molecular weight of 46,000-50,000 being most preferred. Fats and oils may include animal fats such as lard and tallow, vegetable oils such as soybean and cottonseed oils, hydrogenated and partially hydrogenated vegetable oils, and cocoa butter. Commonly used waxes include petroleum waxes such as paraffin and microcrystalline wax, natural waxes such as beeswax, candellia, carnauba and polyethylene wax. The present invention contemplates the use of any commercially acceptable chewing gum base.

The gum base typically also includes a filler component such as calcium carbonate, magnesium carbonate, talc, dicalcium phosphate and the like; gum base softeners, including glycerol monostearate and lecithin; and optional ingredients such as antioxidants, colors and emulsifiers. In accordance with the invention, gum base softeners (i.e. plasticizers) should be kept to a minimum or eliminated when, as with polyvinyl acetate, they may hinder the performance of the mildly hydrophilic polymer attractor. The gum base constitutes between 10-95% by weight of the chewing gum composition, more typically 10-50% by weight of the chewing gum, and most commonly 20-30% by weight of the chewing gum. When the mildly hydrophilic polymer attractor is included in the gum base, the gum base must be present in an amount sufficient to ensure that the polymer attractor constitutes at least 8.4% by weight of the chewing gum, preferably at least 9% by weight of the chewing gum, most preferably at least 11% by weight of the chewing gum as explained above.

The water soluble portion of the chewing gum may include chewing gum softeners, bulk sweeteners, fruit flavoring agents and combinations thereof. Chewing gum softeners are added to the chewing gum in order to optimize the chewability and mouth feel of the gum. When used, the softeners generally constitute between 0.5-15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sugar sweeteners which are at least 60% as sweat as sucrose constitute between 10-90% by weight of the chewing gum, more typically 20-80% by weight of the chewing gum and moat commonly 30-60% by weight of the chewing gum. Sugar sweeteners may include saccharide containing components including but not limited to sucrose, dextrose, maltose, dried invert sugar, fructose, and the like, alone or in combination. Other sugar sweeteners and/or sugarless sweeteners may also be included, but are not required by the invention. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolysates, maltitol, and the like, alone or in combination.

Combinations of sugar and/or sugarless sweeteners may be used in the chewing gum. The sweetener may also function in the chewing gum in whole or in part as a water soluble bulking agent. Additionally, the softener may provide additional sweetness such as with aqueous sugar or alditol solutions.

Flavor should generally be present in the chewing gum in an amount within the range of 0.1-15% by weight of the chewing gum, preferably between 0.2-5% by weight of the chewing gum, most preferably between 0.5-3% by weight of the chewing gum. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Natural or artificial flavoring agents and components may be used in the chewing gum of the invention. Natural and artificial flavoring agents may be combined in any sensorially acceptable fashion.

Optional ingredients such as colors, emulsifiers, pharmaceutical agents and additional flavoring agents may also be included in chewing gum.

The chewing gum of the invention is generally manufactured by sequentially adding the various chewing gum ingredients to any commercially available mixer known in the art. After the ingredients have been thoroughly mixed, the gum mass is discharged from the mixer and shaped into the desired form such as by rolling into sheets, scoring and cutting into sticks. Generally, the ingredients are mixed by first melting the gum base and adding it to the running mixer. The gum base may alternatively be melted in the mixer. Color and emulsifiers can be added at this time.

A chewing gum softener such as glycerin can be added next along with syrup and part of the bulk portion. Further parts of the bulk portion may then be added to the mixer. Flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, may be followed.

As stated above the mildly hydrophilic polymer attractor can be added initially into the chewing gum base, or later added during manufacture of the chewing gum. The medium to high molecular weight polyvinyl acetate which is used as the polymer attractor, should be added during manufacture of the gum base, in the middle or near the front of the otherwise conventional mixing cycle, with the elastomer and filler. Once the polyvinyl acetate has been dispersed, the remaining gum base ingredients (emulsifiers, etc.) can be added. Typically, a sigma blade batch mixer can be used to make the gum base.

A wide range of changes and modifications to the embodiments of the invention described above will be apparent to persons skilled in the art. The following examples are not to be construed as imposing limitations on the invention, but are included merely to illustrate preferred embodiments.

### EXAMPLE 1 (COMPARATIVE)

This Example illustrates the preparation of a conventional sugar-sweetened gum, using sucrose sugar.

Initially, a conventional gum base was prepared using the following formulation:

| Ingredient | % By Weight In Gum Base |
|---|---|
| Isobutylene - isoprene copolymer | 10.1 |
| Polyisobutylene | 1.6 |
| Terpene resin | 26.9 |
| Low M.W. polyvinyl acetate (mol. wt. = 25,000) | 27.3 |
| Paraffin wax | 6.9 |
| Lecithin | 2.7 |
| Glycerol monostearate | 4.8 |
| Microcrystalline waxes | 6.4 |
| Hydrogenated vegetable oil | 2.0 |
| Calcium carbonate | 11.2 |
| Color | 0.1 |
| TOTAL | 100.00 |

When making the above gum base, a conventional mixing procedure was employed. A Werner-Pfleiderer production mixer was used to produce a 340kg (750-1b) batch at 115°C using a drive speed of 252 rpm and a steam pressure of 0.32 MPa (45 psi). The total mixing time was 2.5 hours. The following table shows when and how much of each ingredient was added during the mixing cycle. Note that the polyvinyl acetate was not added early in the cycle, in the conventional process, and the polyvinyl acetate had an average molecular weight of only 25,000.

| Ingredient | % Added | Time of Addition During Mixing Cycle |
|---|---|---|
| Isobutylene-isoprene copolymer (ground) | 10.1 | 0:00 |
| Polyisobutylene | 1.6 | 0:00 |
| Calcium carbonate | 11.2 | 0:00 |
| Color | 0.1 | 0:00 |
| Terpene resin | 2,96 | 0:00 |
| Terpene resin | 2.96 | 0:30 |
| Terpene resin | 5.92 | 0:40 |
| Terpene resin | 7.53 | 0:50 |
| Terpene resin | 7.53 | 1:00 |
| Low M.W. polyvinyl acetate (mol. wt. = 25000) | 7.06 | 1:10 |
| Low M.W. polyvinyl acetate (mol. wt. = 25000) | 10.12 | 1:20 |
| Low M.W. polyvinyl acetate (mol. wt. = 25000) | 10.12 | 1:30 |
| Paraffin wax | 6.9 | 2:00 |
| Lecithin | 2.7 | 2:00 |
| Glycerol monostearate | 4.8 | 2:00 |
| Microcrystalline wax | 6.4 | 2:00 |
| Hydrogenated vegetable oil | 2.0 | 2:00 |
| TOTAL | 100.0 | 2:30 |

Next, a conventional sugar-sweetened chewing gum was prepared using the conventional base, according to the following formulation. Note that the amount of polyvinyl acetate in the resulting chewing gum (6.55%, or 27.3% of the base) is less than the 8.4% minimum required for the invention. However, the moisture content of 2.1% was higher than the preferred 2.0% minimum.

| Ingredient | % By Weight In Chewing Gum |
|---|---|
| Conventional base | 24.0 |
| Glycerin (5% moisture) | 1.15 |
| Glucose syrup (80% solids) | 7.30 |
| Sugar (Sucrose) | 58.14 |
| Dextrose monohydrate (92% solids) | 7.28 |
| Lecithin | 0.13 |
| Free mixed fruit flavor | 2.00 |
| TOTAL | 100.0 |

The conventional sugar-sweetened chewing gum of Example 1 was evaluated for sweetness intensity as a function of time by a panel of trained sensory experts. The panelists evaluated the gum at different chewing times on a scale between zero and 15, wherein zero means no sweetness intensity and 15 means very strong sweetness intensity.

The results of the evaluation are shown in FIG. 1. As shown, the conventional chewing gum exhibited an initial flavor burst during chewing of 12.3-13.0 sweetness intensity units (S.I.U.'s). The sweetness intensity then dissipated steadily, falling below 15% of its original level (or 1.9 S.I.U.'s) after about nine minutes of chewing. In other words, the conventional sugar-sweetened gum of Example 1 had an enjoyable sweetness period of about nine minutes.

EXAMPLE 2 (INVENTIVE)

This Example illustrates the preparation of an inventive sugar-sweetened gum, for comparison with Example 1, using the same sucrose sugar sweetener. Initially, a gum base was prepared using a polyvinyl acetate polymer attractor at a higher level, and a higher average molecular weight, than used in Example 1. The inventive gum base had the following formulation:

| Ingredient | % By Weight In Gum Base |
|---|---|
| Isobutylene-isoprene copolymer | 7.0 |
| Polyisobutylene | 3.0 |
| Terpene resin | 10.0 |
| Glycerol ester of hydrogenated rosin | 10.0 |
| Low M.W. polyvinyl acetate (mol. wt. = 25,000) | 15.0 |
| Medium M.W. polyvinyl acetate (mol. wt. = 40,000) | 20.0 |
| Lecithin | 5.0 |
| Glycerol monostearate | 10.0 |
| Calcium carbonate | 20.0 |
| TOTAL | 100.0 |

As shown above, the inventive gum base of Example 2 differed from the conventional base of Example 1 in several significant respects, including a) the use of a higher amount of polyvinyl acetate, b) the use of higher average molecular weight polyvinyl acetate, having an average molecular weight of more than 30,000 and c) the elimination of waxes, which act like gum base plasticizers. In order to prepare the gum base of Example 2, without using waxes or plasticizers, a different mixing procedure was also used. A Haake Rheocord 90 mixer was equipped with a 3000 E mixing bowl to produce a 450-gram batch at 115°C and 40 rpm. The medium molecular weight polyvinyl acetate was added at the front of the mixing cycle, and the mixing cycle was shortened to 32 minutes. The following table shows when and how much of each ingredient was added at different times during the mixing cycle.

| Ingredient | % Added | Time of Addition During Mixing Cycle |
|---|---|---|
| Medium M.W. polyvinyl acetate (ground) | 20.0 | 0:00 |
| Isobutylene-isoprene copolymer | 7.0 | 0:00 |
| Calcium carbonate | 20.0 | 0:00 |
| Terpene resin | 5.0 | 0:00 |
| Terpene resin | 5.0 | 0:05 |
| Low M.W. polyvinyl acetate (ground) | 15.0 | 0:05 |
| Glycerol ester of hydrogenated rosin | 5.0 | 0:08 |
| Glycerol ester of hydrogenated rosin | 5.0 | 0:10 |
| Polyisobutylene | 3.0 | 0:13 |
| Glycerol monostearate | 10.0 | 0:23 |
| Lecithin | 5.0 | 0:30 |
| TOTAL | 100.0 | 0:32 |

Next, an inventive sucrose sugar-sweetened chewing gum was prepared using the inventive base, according to the following formulation. The following formulation is the same as that used in preparing the gum of Example 1 except that the inventive base was substituted for the conventional base.

| Ingredient | % By Weight in Chewing Gum |
|---|---|
| Inventive base | 24.0 |
| Glycerin (5% moisture) | 1.15 |
| Glucose syrup (80% solids) | 7.30 |
| Sugar (sucrose) | 58.14 |
| Dextrose monohydrate (92% solids) | 7.28 |
| Lecithin | 0.13 |
| Free mixed fruit flavor | 2.00 |
| TOTAL | 100.0 |

8

Note that the inventive chewing gum of Example 2 contained a total of 8.4% by weight polyvinyl acetate polymer attractor, with an average molecular weight exceeding 30,000, and a total of 2.1% by weight moisture. In accordance with the invention, and unlike the gum of Example 1, this is higher than the minimum level of 8.4 % polymer attractor and the preferred minimum of 2% moisture.

The inventive sugar-sweetened chewing gum of Example 2 was evaluated for sweetness intensity as a function of time in the same manner explained in Example 1. The results of this evaluation are shown in FIG. 1. As shown, the inventive chewing gum exhibited an initial sweetness burst of almost identical intensity to the sweetness burst achieved with the conventional gum of Example 1. However, the sweetness intensity of Example 2 dissipated at a different rate, and did not fall below 15% of its initial intensity level (about 1.9 S.I.U's) until almost twalve minutes of chewing. In other words, the inventive sugar-sweetened gum of Example 2 had an enjoyable sweetness period almost three minutes longer than that of the conventional sugar-sweetened gum of Example 1.

As shown in FIG. 1, the inventive gum of Example 2 actually exhibited a lower sweetness intensity than the conventional gum of Example 1 at intermediate chewing times of from 1 to 8 minutes. This is not considered a drawback to the invention because, as shown in the following Example 3, the intermediate sweetness intensity of the inventive chewing gum can be greatly enhanced without increasing the initial sweetness burst, by further modifying the formulation.

EXAMPLE 3 (COMPARATIVE)

This Example illustrates the preparation of another conventional sugar-sweetened gum, using the same sucrose sugar sweetener.

Initially, a conventional gum base was prepared according to the following formulation:

| Ingredient | % By Weight In Gum Base |
| --- | --- |
| Isobutylene-isoprene copolymer | 10.1 |
| Polyisobutylene | 1.6 |
| Terpene resins | 26.9 |
| Low M.W. polyvinyl acetate (mol. wt. = 25,000) | 27.3 |
| Lecithin | 2.7 |
| Glycerol monostearate | 4.8 |
| Microcrystalline/paraffin wax | 13.3 |
| Hydrogenated vegetable oil | 2.0 |
| Calcium carbonate | 11.2 |
| Color/BHT | 0.1 |
| TOTAL | 100.0 |

As shown above, the gum base of Example 3 had essentially the same composition as the gum base of Example 1, described above. The gum base of Example 3 was also made using the same conventional procedure as the gum base of Example 1, described above.

Next, a conventional sugar-sweetened chewing gum was prepared using the conventional base, according to the following formulation. Note that the amount of polyvinyl acetate in the resulting chewing gum (5.19 %, or 27.3% of the base) is less than the 8.4% minimum required for the invention. However, the moisture content of 2.7% was higher than the preferred 2.0% minimum.

| Ingredient | % By weight In Chewing Gum |
| --- | --- |
| Conventional base | 19.0 |
| Glycerin (5% moisture) | 1.15 |
| Glucose syrup (85% solids) | 13.91 |
| Lecithin | 0.13 |
| Sugar (sucrose) | 57.72 |
| Dextrose monohydrate (92% solids) | 7.28 |
| Free mixed fruit flavor | 0.81 |
| TOTAL | 100.0 |

**EP 0 755 194 B1**

The conventional mixed fruit-flavored gum of Example 3 was evaluated for sweetness intensity as a function of time using the same procedure explained in regard to Examples 1 and 2. The results of the evaluation are shown in FIG. 2. As shown, the conventional gum of Example 3 exhibited an initial sweetness burst of 11.4-12.3 S.I.U.'s when chewing was commenced. Thereafter, the sweetness intensity dissipated steadily, falling below 15% of its original value (about 1.8 S.I.U.'s) after about eight minutes of chewing. In other words, the conventional sugar-sweetened gum of Example 3 had an enjoyable sweetness period of about eight minutes.

**Claims**

1. A method of making a sugar-containing chewing gum ,free of modified high intensity sweeteners and other artificial sweeteners, having enhanced long-term sweetness provided by the sugar, comprising the steps of:

   providing from 10 to 95 wt% of a chewing gum base including polyvinyl acetate having a number average molecular weight of at least 30,000 as a mildly hydrophilic polymer attractor in sufficient quantity to constitute at least 8.4 wt% of the chewing gum;
   providing from 10 to 90 wt% sugar which is at least 60% as sweet as sucrose;
   providing one or more humectants;
   adding the gum base, sugar humectant/s and any other ingredients to a mixer;
   blending the ingredients together to form chewing gum whereby;
   some of the sugar mixes with water to form a water-sugar mixture;
   at least some of the water/sugar mixture is temporarily attached to the mildly hydrophilic polymer attractor; and

   the temporary attachment of the water/sugar mixture to the polymer attractor temporarily delays the release of the sugar thereby providing enhanced long-term sweetness during chewing.

2. A method as claimed in claim 1, wherein a sufficient quantity of polymer attractor is provided to prolong the enjoyable sweetness period by at least one minute compared to a conventional sugar-sweetened chewing gum.

3. A method as claimed in claim 1 or claim 2, wherein in addition to the humectant there is added one or more water-containing ingredients to the chewing gum.

4. A method as claimed in any one of claims 1 to 3, wherein the sugar is selected from the group consisting of sucrose, dextrose, fructose, maltose, dried invert sugar, and mixtures thereof.

5. A method as claimed in any one of claims 1 to 3, wherein the sugar comprises sucrose.

6. A method as claimed in any one of the preceding claims, wherein the polyvinyl acetate has a number average molecular weight of from 30,000 to 80, 000.

7. A method as claimed in any one of the preceding claims, wherein the mildly hydrophilic polymer attractor constitutes at least 9 wt% of the chewing gum.

8. A method as claimed in any one of claims 1 to 6, wherein the mildly hydrophilic polymer attractor constitutes at least 11 wt% of the chewing gum.

9. A method as claimed in any one of the preceding claims wherein the sugar constitutes from 20 to 80 wt% of the chewing gum.

10. A method as claimed in any one of claims 1 to 8, wherein the sugar constitutes from 30 to 60 wt% of the chewing gum.

11. A method as claimed in any one of the preceding claims, wherein the chewing gum produced initially contains at least 2.0 wt% water.

12. A method as claimed in claim 11, wherein the water constitutes at least 2.5 wt% of the chewing gum.

13. A method as claimed in claim 11, wherein the water constitutes at least 3.0 wt% of the chewing gum.

**14.** A method as claimed in any one of the preceding claims, wherein the gum includes 0.1 to 15% by weight flavour.

**15.** A sugar-sweetened chewing gum, free of modified high intensity sweetners & other artificial sweeteners, having enhanced long-term sweetness, comprising the following ingredients:

from 10 to 95% by weight of a water-insoluble portion including polyvinyl acetate having a number average molecular weight of at least 30,000 as a mildly hydrophilic polymer attractor in sufficient quantity to constitute at least 8.4 wt% of the chewing gum;
from 10 to 90 wt% sugar selected from the group consisting of saccharide-containing compounds which are at least 60% as sweet as sucrose.
at least 2 wt% water;

wherein some of the sugar is mixed with water;
wherein at least some of the water mixed with sugar is temporarily attached to the mildly hydrophilic polymer attractor; and
from 0.1 to 15 wt% of one or more flavouring agents.

**16.** A chewing gum as claimed in claim 15, comprising at least 9 wt% of the mildly hydrophilic polymer attractor.

**17.** A chewing gum as claimed in any one of claims 15 and 16, comprising at least 11 wt% of the mildly hydrophilic polymer attractor.

**18.** A chewing gum as claimed in any one of claims 15 to 17, comprising at least 2.5 wt% water.

**19.** A chewing gum as claimed in any one of claims 15 to 18, comprising at least 3.0 wt% water.

**20.** Use of polyvinyl acetate having a number average molecular weight of at least 30,000 in sufficient quantity to constitute at least 7 wt% of a sugar-containing chewing gum free of modified high intensity sweeteners and other artificial sweeteners to enhance the long term sweetness of the chewing gum.


**Patentansprüche**

**1.** Verfahren zur Herstellung eines Zucker enthaltenden Kaugummis, der frei von modifizierten Süßungsmitteln mit hoher Süßkraft und anderen künstlichen Süßungsmitteln ist und einen länger anhaltenden süßen Geschmack, der von dem Zucker herrührt, aufweist, wobei das Verfahren die Stufen umfasst:

Bereitstellung von 10 bis 95 Gew.-% einer Kaugummibase, die Polyvinylacetat mit einem zahlendurchschnittlichen Molekulargewicht von mindestens 30 000 als schwach hydrophiles Polymer-Rückhaltemittel (-Attraktor) in ausreichender Menge enthält, um mindestens 8,4 Gew.-% des Kaugummis darzustellen; Bereitstellung von 10 bis 90 Gew.-% Zucker, der zu mindestens 60 % so süß ist wie Saccharose;
Bereitstellung eines oder mehrerer Feuchthaltemittel;
Einführen der Kaugummibase, des (der) Zuckerfeuchthaltemittel(s) und irgendwelcher weiterer Bestandteile in einen Mischer; und
Vermischen der Bestandteile unter Bildung eines Kaugummis, wodurch ein Teil des Zuckers mit Wasser vermischt wird unter Bildung einer Wasser/Zucker-Mischung;
mindestens ein Teil der Wasser/Zucker-Mischung vorübergehend von dem schwach hydrophilen Polymer Rückhaltemittel festgehalten wird; und
die Wasser/Zucker-Mischung vorübergehend zurückgehalten wird an dem Polymer-Rückhaltemittel, das die Freisetzung des Zuckers vorübergehend hinauszögert, um dadurch einen länger anhaltenden süßen Geschmack während des Kauens zu erzielen.

**2.** Verfahren nach Anspruch 1, bei dem eine ausreichende Menge Polymer-Rückhaltemittel bereitgestellt wird, um die Dauer des angenehm süßen Geschmacks um mindestens 1 min zu verlängern, verglichen mit einem konventionellen, mit Zucker gesüßten Kaugummi.

**3.** Verfahren nach Anspruch 1 oder 2, bei dem während der Zugabe des Feuchthaltemittels ein oder mehr Wasser enthaltende Bestandteile dem Kaugummi zugesetzt werden.

4. Verfahren nach einem der Ansprüche 1 bis 3, bei dem der Zucker ausgewählt wird aus der Gruppe, die besteht aus Saccharose, Dextrose, Fructose, Maltose, getrocknetem Invertzucker und Mischungen davon.

5. Verfahren nach einem der Ansprüche 1 bis 3, bei dem der Zucker Saccharose umfasst.

6. Verfahren nach einem der vorhergehenden Ansprüche, bei dem das Polyvinylacetat ein zahlendurchschnittliches Molekulargewicht von 30 000 bis 80 000 aufweist.

7. Verfahren nach einem der vorhergehenden Ansprüche, bei dem das schwach hydrophile Polymer-Rückhaltemittel mindestens 9 Gew.-% des Kaugummis darstellt.

8. Verfahren nach einem der Ansprüche 1 bis 6, bei dem das schwach hydrophile Polymer-Rückhaltemittel mindestens 11 Gew.-% des Kaugummis darstellt.

9. Verfahren nach einem der vorhergehenden Ansprüche, bei dem der Zucker 20 bis 80 Gew.-% des Kaugummis darstellt.

10. Verfahren nach einem der Ansprüche 1 bis 8, bei dem der Zucker 30 bis 60 Gew.-% des Kaugummis darstellt.

11. Verfahren nach einem der vorhergehenden Ansprüche, bei dem der anfänglich hergestellte Kaugummi mindestens 2,0 Gew.-% Wasser enthält.

12. Verfahren nach Anspruch 11, bei dem das Wasser mindestens 2,5 Gew.-% des Kaugummis darstellt.

13. Verfahren nach Anspruch 11, bei dem das Wasser mindestens 3,0 Gew.-% des Kaugummis darstellt.

14. Verfahren nach einem der vorhergehenden Ansprüche, bei dem der Kaugummi 0,1 bis 15 Gew.-% Geschmacksstoff enthält.

15. Mit Zucker gesüßter Kaugummi, der frei von modifizierten Süßungsmitteln mit hoher Süßkraft und anderen künstlichen Süßungsmitteln ist und einen länger anhaltenden süßen Geschmack aufweist, wobei der Kaugummi die folgenden Bestandteile umfasst:

   10 bis 95 Gew.-% eines in Wasser unlöslichen Anteils, der Polyvinylacetat mit einem zahlendurchschnittlichen Molekulargewicht von mindestens 30 000 als schwach hydrophiles Polymer-Rückhaltemittel in einer ausreichenden Menge enthält, um mindestens 8,4 Gew.-% des Kaugummis darzustellen;
   10 bis 90 Gew.-% Zucker, ausgewählt aus der Gruppe, die besteht aus Saccharid enthaltenden Verbindungen, die zu mindestens 60 % so süß sind wie Saccharose;
   mindestens 2 Gew.-% Wasser,

   wobei ein Teil des Zuckers mit Wasser gemischt ist, und
   wobei mindestens ein Teil des Wassers, das mit dem Zucker gemischt ist, von dem schwach hydrophilen Polymer-Rückhaltemittel vorübergehend zurückgehalten wird, und
   0,1 bis 15 Gew.-% eines oder mehrerer Geschmacksstoffe.

16. Kaugummi nach Anspruch 15, der mindestens 9 Gew.-% des schwach hydrophilen Polymer-Rückhaltemittels umfasst

17. Kaugummi nach einem der Ansprüche 15 und 16, der mindestens 11 Gew.-% des schwach hydrophilen Polymer-Rückhaltemittels umfasst.

18. Kaugummi nach einem der Ansprüche 15 bis 17, der mindestens 2,5 Gew.-% Wasser umfasst.

19. Kaugummi nach einem der Ansprüche 15 bis 18, der mindestens 3,0 Gew.-% Wasser umfasst.

20. Verwendung von Polyvinylacetat, das ein zahlendurchschnittliches Molekulargewicht von mindestens 30 000 aufweist, in ausreichender Menge, sodass es mindestens 7 Gew.-% eines Zucker enthaltenden Kaugummis darstellt, der frei von modifizierten Süßungsmitteln mit hoher Süßkraft und anderen künstlichen Süßungsmitteln ist, um die Dauer des süßen Geschmacks des Kaugummis zu erhöhen.

**Revendications**

1. Procédé de préparation d'une gomme à mâcher contenant un sucre, exempte d'édulcorants modifiés d'intensité élevée et d'autres édulcorants artificiels, ayant une sucrosité de longue durée augmentée fournie par le sucre, comprenant les étapes consistant à :

   fournir de 10 à 95 % en poids d'une base de gomme à mâcher comprenant de l'acétate de polyvinyle ayant une masse moléculaire moyenne en nombre d'au moins 30 000 en tant qu'attracteur polymère modérément hydrophile, en une quantité suffisante pour qu'il constitue au moins 8.4 % en poids de la gomme à mâcher ;
   fournir de 10 à 90 % en poids d'un sucre qui est au moins 60 %- aussi sucrant que le saccharose ;
   fournir un ou plusieurs humidifiants ;
   ajouter la base de gomme, l'humidifiant ou les humidifiants pour le sucre et tout autre ingrédient dans un mixeur ;
   mélanger les ingrédients ensemble pour former ainsi une gomme à mâcher grâce à quoi
   une partie du sucre se mélange avec de l'eau pour former un mélange d'eau et de sucre ;
   au moins une partie du mélange d'eau/sucre se fixe temporairement à l'attracteur polymère modérément hydrophile ; et
   la fixation temporaire du mélange d'eau/sucre à l'attracteur polymère retarde temporairement la libération du sucre, fournissant ainsi une sucrosité de longue durée augmentée pendant la mastication.

2. Procédé selon la revendication 1, dans lequel on fournit une quantité suffisante d'attracteur polymère pour prolonger la période de sucrosité appréciable d'au moins une minute par comparaison à une gomme à mâcher usuelle édulcorée avec un sucre.

3. Procédé selon la revendication 1 ou la revendication 2, dans lequel, en plus de l'humidifiant, on ajoute un ou plusieurs ingrédients contenant de l'eau à la gomme à mâcher.

4. Procédé selon l'une quelconque des revendications 1 à 3, dans lequel on choisit le sucre dans l'ensemble constitué de saccharose, dextrose, fructose, maltose, sucre interverti séché et des mélanges de ceux-ci.

5. Procédé selon l'une quelconque des revendications 1 à 3, dans lequel le sucre est constitué de saccharose.

6. Procédé selon l'une quelconque des revendications précédentes, dans lequel l'acétate de polyvinyle a une masse moléculaire moyenne en nombre de 30 000 à 80 000.

7. Procédé selon l'une quelconque des revendications précédentes, dans lequel l'attracteur polymère modérément hydrophile constitue au moins 9 % en poids de la gomme à mâcher.

8. Procédé selon l'une quelconque des revendications 1 à 6, dans lequel l'attracteur polymère modérément hydrophile constitue au moins 11 % en poids de la gomme à mâcher.

9. Procédé selon l'une quelconque des revendications précédentes, dans lequel le sucre constitue de 20 à 80 % en poids de la gomme à mâcher.

10. Procédé selon l'une quelconque des revendications 1 à 8, dans lequel le sucre constitue de 30 à 60 % en poids de la gomme à mâcher.

11. Procédé selon l'une quelconque des revendications précédentes, dans lequel la gomme à mâcher produite initialement contient au moins 2,0 % en poids d'eau.

12. Procédé selon la revendication 11, dans lequel l'eau constitue au moins 2,5 % en poids de la gomme à mâcher.

13. Procédé selon la revendication 11, dans lequel l'eau constitue au moins 3,0 % en poids de la gomme à mâcher.

14. Procédé selon l'une quelconque des revendications précédentes, dans lequel la gomme comprend de 0,1 à 15 % en poids d'arôme.

**15.** Gomme à mâcher édulcorée avec un sucre, exempte d'édulcorants modifiés d'intensité élevée ou d'autres édulcorants artificiels, ayant une sucrosité de longue durée augmentée, comprenant les ingrédients suivants :

de 10 à 95 % en poids d'une partie insoluble dans l'eau, comprenant de l'acétate de polyvinyle ayant une masse moléculaire moyenne en nombre d'au moins 30 000 en tant qu'attracteur polymère modérément hydrophile, en une quantité suffisante pour constituer au moins 8,4 % en poids de la gomme à mâcher ;
de 10 à 90 % en poids d'un sucre choisi dans l'ensemble constitué de composés contenant des saccharides, qui sont au moins 60 % aussi sucrants que le saccharose ;
au moins 2 % en poids d'eau ;

dans laquelle une partie du sucre est mélangée avec de l'eau ;
dans laquelle au moins une partie de l'eau mélangée avec le sucre se fixe temporairement à l'attracteur polymère modérément hydrophile ; et
de 0,1 à 15 % en poids d'un ou plusieurs agents aromatisants.

**16.** Gomme à mâcher selon la revendication 15, comprenant au moins 9 % en poids de l'attracteur polymère modérément hydrophile.

**17.** Gomme à mâcher selon l'une quelconque des revendications 15 et 16, comprenant au moins 11 % en poids de l'attracteur polymère modérément hydrophile.

**18.** Gomme à mâcher selon l'une quelconque des revendications 15 à 17, comprenant au moins 2,5 % en poids d'eau.

**19.** Gomme à mâcher selon l'une quelconque des revendications 15 à 18, comprenant au moins 3,0 % en poids d'eau.

**20.** Utilisation d'acétate de polyvinyle ayant une masse moléculaire moyenne en nombre d'au moins 30 000 en une quantité suffisante pour constituer au moins 7 % en poids d'une gomme à mâcher contenant un sucre, exempte d'édulçorants modifiés d'intensité élevée et d'autres édulcorants artificiels, pour augmenter la sucrosité de longue durée de la gomme à mâcher.

FIGURE 1
SWEETNESS INTENSITY

Not Sweet-Very (Scale 0-15)

— Ex. 1 (Conventional)    + Ex. 2 (Inventive)

MINUTES